# EUROPEAN PATENT APPLICATION

(11) **EP 4 692 723 A1**
(43) Date of publication of application: **11.02.2026**
(21) Application number: 24780168.1
(22) Date of filing: 25.03.2024
(51) Int. Cl.: G01C 15/00, G01C 15/06

(54) **SURVEYING SYSTEM, SURVEYING DEVICE, SURVEYING METHOD, AND SURVEYING PROGRAM**

(30) Priority: 31.03.2023 JP 2023058031
(71) Applicant: TOPCON CORPORATION, Tokyo 174-8580, (JP)
(72) Inventor: SATO, Kohei, Tokyo 174-8580 (JP); NISHI, Yoshihiro, Tokyo 174-8580 (JP); TANAKA, Takashi, Tokyo 174-8580 (JP); NISHITA, Nobuyuki, Tokyo 174-8580 (JP)
(74) Representative: Schmitt-Nilson Schraud Waibel Wohlfrom Patentanwälte Partnerschaft mbB
(86) International application number: PCT/JP2024/011673
(87) International publication number: WO 2024/204050

(57) **Abstract**

This surveying system 1 comprises: a ranging unit 102 that measures distance to a survey target 301 using ranging light; direction detection units 106 and 107 that detect an emission direction of the ranging light; an arithmetic unit 101b that acquires position information of the survey target 301 based on the distance measured by the ranging unit 102 and the emission direction detected by the direction detection units 106 and 107; a storage unit 111 that stores offset information R that is distance information from the survey target 301 to a survey point P; and a swing guide unit 201b that estimates a swing state of the survey target 301 based on a plurality of pieces of the position information acquired by the arithmetic unit 101b and the offset information, and produces swing guide information of the survey target 301 according to the estimated swing state.

## Description

### [Technical Field]

The present disclosure relates to a surveying system, a surveying apparatus, a surveying method, and a surveying program.

### [Background Art]

For lightwave-based surveys using a total station (TS), a pole having a survey target (a retroreflective part) such as a prism has conventionally been set up vertically at a survey point. Such surveys have been low in work efficiency due to a lot of time and effort such as leveling using an air bubble tube or other tools in order to set up a pole vertically at a survey point.

To deal with this, as a lightwave-based surveying method using a total station (TS), Patent Literature 1 below has disclosed a method of placing the end of a pole (a pole prism) having a prism that is a survey target at a survey point on the ground or other surfaces, inclining the pole from the vertical direction, measuring the position of the prism a plurality of times while swinging (tilting) the pole about the survey point, and calculating the position of the survey point corresponding to the position of the end of the pole by computation.

### [Citation List]

### [Patent Literature]

[Patent Literature 1] Japanese Patent Laid-Open No. 2002-22443

### [Summary of Invention]

### [Technical Problem]

However, the technique described in Patent Literature 1 necessitates appropriately swinging the pole in order to accurately calculate the position of the survey point, which requires the skill of the operator. In other words, since the operator may fail to swing the pole appropriately to allow for surveying, this prevents smooth calculation of the position of the survey point, resulting in low efficiency in the survey work. Moreover, this problem occurs not only when the operator places the end of the pole at a survey point on the ground but also when they place it at a survey point on the surface of a ceiling or a standing wall. This problem becomes more significant when they place it at a survey point on the surface of a ceiling or a standing wall due to the limited range in which they can swing the pole.

Therefore, an object of the present disclosure is to provide a surveying system, a surveying apparatus, a surveying method, or a surveying program that can make it easier to appropriately swing a pole in surveys for calculating the position of a survey point by swinging a pole.

### [Solution to Problem]

To achieve the above object, a surveying system according to a first item of the present disclosure comprises: a ranging unit that measures distance to a survey target using ranging light; a direction detection unit that detects an emission direction of the ranging light; an arithmetic unit that acquires position information of the survey target based on the distance measured by the ranging unit and the emission direction detected by the direction detection unit; a storage unit that stores offset information that is distance information from the survey target to a survey point; and a swing guide unit that estimates a swing state of the survey target based on a plurality of pieces of the position information acquired by the arithmetic unit and the offset information, and produces swing guide information of the survey target according to the estimated swing state.

In a surveying system according to a second item of the present disclosure, in the surveying system according to the first item, the arithmetic unit calculates a positional coordinate of the survey point from the plurality of pieces of position information and the offset information, and the swing guide unit calculates accuracy of the calculated positional coordinate of the survey point from the estimated swing state, and ends production of the swing guide information when determining that the accuracy is equal to or greater than a predetermined threshold value.

In a surveying system according to a third item of the present disclosure, in the surveying system according to the first item or the second item, the arithmetic unit calculates a positional coordinate of the survey point from the plurality of pieces of position information and the offset information, and the swing guide unit calculates accuracy of the calculated positional coordinate of the survey point from the estimated swing state, and produces the swing guide information for increasing the accuracy when determining that the accuracy is less than a predetermined threshold value.

In a surveying system according to a fourth item of the present disclosure, in the surveying system according to the third item, the swing guide information for increasing the accuracy is information related to a swing trajectory of the survey target.

In a surveying system according to a fifth item of the present disclosure, in the surveying system according to the third item, the swing guide information for increasing the accuracy is information on the number of swings of the survey target.

In a surveying system according to a sixth item of the present disclosure, in the surveying system according to the third item, the swing guide information for increasing the accuracy is information on swing velocity of the survey target.

In a surveying system according to a seventh item of the present disclosure, in the surveying system according to the third item, the swing guide information for increasing the accuracy is information on a degree of the accuracy.

A surveying apparatus according to an eighth item of the present disclosure comprises: a ranging unit that measures distance to a survey target using ranging light; a direction detection unit that detects an emission direction of the ranging light; an arithmetic unit that acquires position information of the survey target based on the distance measured by the ranging unit and the emission direction detected by the direction detection unit; a storage unit that stores offset information that is distance information from the survey target to a survey point; and a swing guide unit that estimates a swing state of the survey target based on a plurality of pieces of the position information acquired by the arithmetic unit and the offset information, and produces swing guide information of the survey target according to the estimated swing state.

A surveying method according to a ninth item of the present disclosure comprises: a ranging step of measuring distance to a survey target using ranging light; a direction detection step of detecting an emission direction of the ranging light; an arithmetic step of acquiring position information of the survey target based on the distance measured in the ranging step and the emission direction detected in the direction detection step; and a swing guide step of estimating a swing state of the survey target based on a plurality of pieces of the position information acquired in the arithmetic step and offset information that is distance information from the survey target to a survey point, and producing swing guide information of the survey target according to the estimated swing state.

A surveying program according to a tenth item of the present disclosure is a surveying program for causing a computer to execute: a swing guide step of estimating a swing state of a survey target based on a plurality of pieces of position information of the survey target acquired using a surveying method and offset information that is distance information from the survey target to a survey point, and producing swing guide information of the survey target according to the estimated swing state, the surveying method comprising: a ranging step of measuring distance to the survey target using ranging light; a direction detection step of detecting an emission direction of the ranging light; and an arithmetic step of acquiring each of the plurality of pieces of position information based on the distance measured in the ranging step and the emission direction detected in the direction detection step.

### [Advantageous Effects of Invention]

According to the present disclosure, it is possible to provide a surveying system, a surveying apparatus, a surveying method, and a surveying program that can make it easier to appropriately swing a pole in surveys for calculating the position of a survey point by swinging a pole.

### [Brief Description of Drawings]

[Figure 1] Figure 1 is an overall configuration diagram showing a surveying system.
[Figure 2] Figure 2 is a block diagram of a body surveying apparatus and a terminal surveying apparatus in the surveying system.
[Figure 3A] Figure 3A is a diagram showing a display screen on the terminal surveying apparatus.
[Figure 3B] Figure 3B is a diagram showing a display screen on the terminal surveying apparatus.
[Figure 3C] Figure 3C is a diagram showing a display screen on the terminal surveying apparatus.
[Figure 4A] Figure 4A is an explanatory diagram of a method of calculating the accuracy of estimated positional coordinates of a survey point.
[Figure 4B] Figure 4B is an explanatory diagram of a method of calculating the accuracy of estimated positional coordinates of a survey point.
[Figure 4C] Figure 4C is an explanatory diagram of a method of calculating the accuracy of estimated positional coordinates of a survey point.
[Figure 5] Figure 5 is a flowchart for illustrating the process of a surveying method.
[Figure 6] Figure 6 is a block diagram of a computer for executing a surveying program.

### [Description of Embodiments]

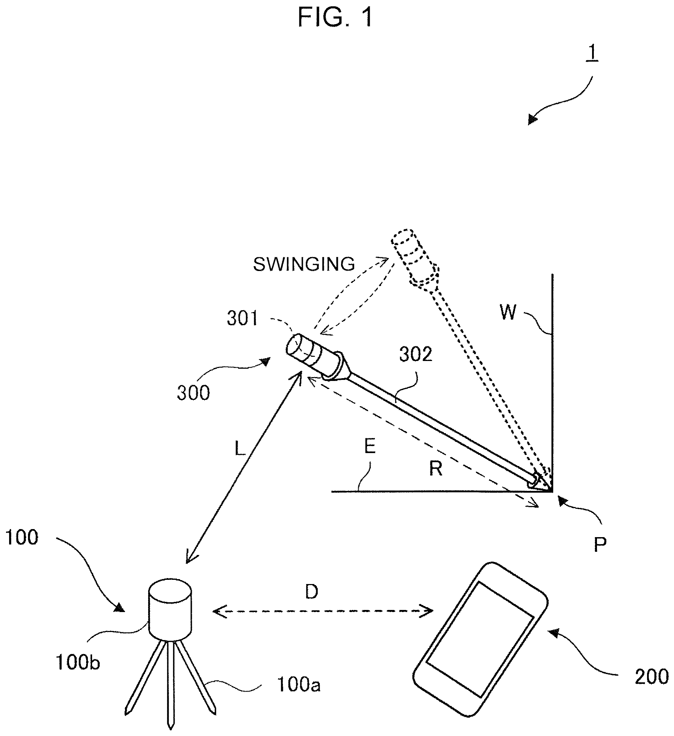

One embodiment of a surveying system, a surveying apparatus, a surveying method, and a surveying program according to the present disclosure will be described with reference to Figures 1-6 as appropriate.

### (Configuration of Surveying System)

One embodiment of a surveying system according to the present disclosure will be described first. As shown in Figure 1, this surveying system 1 is for calculating the positional coordinates of a survey point P on the boundary line between the ground E and a standing wall W.

As shown in Figure 1, the surveying system 1 includes a body surveying apparatus 100, a terminal surveying apparatus 200, and a retroreflective instrument 300. The body surveying apparatus 100, which is a total station (TS) having a mirror device (MD) or other devices, includes a support part 100a (a tripod) placed on the ground E and a body part 100b in a cylindrical shape supported by the support part 100a. The terminal surveying apparatus 200 is a smartphone, a feature phone, a tablet, a handheld computer device (e.g., a personal digital assistant (PDA)), a wearable terminal (e.g., a glasses-type device or a clock-type device), a personal computer, or other devices that enable transmission/reception of data D to/from the body surveying apparatus 100. The retroreflective instrument 300 is a pole 302 having a prism 301 (a retroreflective part that is a survey target) capable of reflecting light L (ranging light and tracking light described later) emitted from the body part 100b. One embodiment of the surveying apparatus according to the present disclosure corresponds to the body surveying apparatus 100 and the terminal surveying apparatus 200.

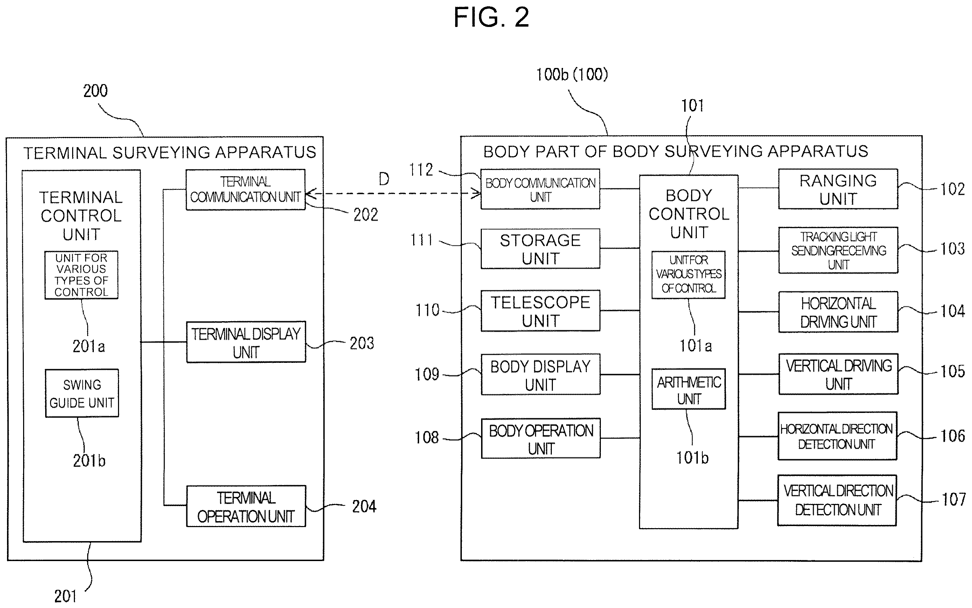

As shown in Figure 2, the body part 100b of the body surveying apparatus 100 includes a body control unit 101, a ranging unit 102, a tracking light sending/receiving unit 103, a horizontal driving unit 104, a vertical driving unit 105, a horizontal direction detection unit 106, a vertical direction detection unit 107, a body operation unit 108, a body display unit 109, a telescope unit 110, a storage unit 111, and a body communication unit 112. The body control unit 101 includes a unit 101a for various types of control and an arithmetic unit 101b.

The unit 101a for various types of control of the body control unit 101 is configured to be able to control the ranging unit 102, the tracking light sending/receiving unit 103, the horizontal driving unit 104, the vertical driving unit 105, the horizontal direction detection unit 106, the vertical direction detection unit 107, the body operation unit 108, the body display unit 109, the telescope unit 110, the storage unit 111, the body communication unit 112, and the arithmetic unit 101b.

The ranging unit 102 includes a light sending unit for sending ranging light toward the prism 301, a light receiving unit for receiving reflected light from the prism 301, and a calculation unit that calculates the distance between the body surveying apparatus 100 and the prism 301 from the sent light and the received light.
The ranging light is visible light, near-infrared light, or ultraviolet light emitted in a straight line, or other light. A well-known pulse or phase difference scheme or other schemes are available as the calculation scheme (the ranging scheme).

The tracking light sending/receiving unit 103 includes a light sending unit for sending tracking light toward the prism 301 and a light receiving unit for receiving reflected light from the prism 301. The tracking light is visible light, near-infrared light, or ultraviolet light emitted radially, or other light. The tracking light sending/receiving unit 103 is disposed so as to emit tracking light in the same direction as the direction of emission of ranging light by the ranging unit 102.

The horizontal driving unit 104 is for rotating the entire body part 100b or the telescope unit 110 alone in the horizontal direction so that the tracking light sending/receiving unit 103 continuously receives tracking light reflected from the prism 301 under the control of the unit 101a for various types of control.

The vertical driving unit 105 is for rotating the telescope unit 110 in the vertical direction so that the tracking light sending/receiving unit 103 continuously receives tracking light reflected from the prism 301 under the control of the unit 101a for various types of control.

The horizontal direction detection unit 106 is a horizontal encoder capable of detecting a horizontal angle that is the rotation angle of the telescope unit 110 in the horizontal direction (i.e., the rotation angle from a reference direction about the vertical axis).

The vertical direction detection unit 107 is a vertical encoder capable of detecting a vertical angle that is the rotation angle of the telescope unit 110 in the vertical direction (i.e., the rotation angle from a reference direction about the horizontal axis).

The arithmetic unit 101b of the body control unit 101 is configured to be able to calculate the positional coordinates (position information) of the prism 301 with respect to the body part 100b as three-dimensional coordinates (x, y, z) based on the distance measured by the ranging unit 102, the horizontal angle detected by the horizontal direction detection unit 106, and the vertical angle detected by the vertical direction detection unit 107. Further, the arithmetic unit 101b can also calculate the three-dimensional coordinates of the survey point P corresponding to the position where the end of the pole 302 is placed from a plurality of positional coordinates (position information) of the prism 301 and offset information (an offset R shown in Figure 1) that is distance information from the prism 301 to the end of the pole 302 (the tip of the pole).

The body operation unit 108 is operation means that allows an operator to make inputs for giving control instructions to the unit 101a for various types of control of the body control unit 101, for example, those including any device such as a touch panel, a switch, a button, or a dial.

The body display unit 109 is for displaying various data, such as those composed of a liquid crystal panel. As used herein, various data refers to any data that has already been acquired or can be acquired by the surveying system 1, such as the distance measured by the ranging unit 102, the horizontal angle detected by the horizontal direction detection unit 106, the vertical angle detected by the vertical direction detection unit 107, and the positional coordinates of the prism 301 and the survey point P calculated by the arithmetic unit 101b. It is also possible to form the body display unit 109 integrally with the body operation unit 108.

The telescope unit 110 is configured to enable the operator to visually recognize the position of the prism 301 through the telescope unit 110. The collimation direction of the telescope unit 110 is the same as the direction of emission of ranging light by the ranging unit 102 and the direction of emission of tracking light by the tracking light sending/receiving unit 103.

The storage unit 111, which is implemented by using, for example, a storage medium such as an HDD, an SSD, or a flash memory, is configured to be able to store various data such as the dimensions (e.g., height, width, and depth) of the body surveying apparatus 100, various programs, survey data, GPS times, and captured images.

Then, the storage unit 111 stores the distance (e.g., slope distance) measured by the ranging unit 102, the horizontal angle detected by the horizontal direction detection unit 106, the vertical angle detected by the vertical direction detection unit 107, the positional coordinates (position information) of the prism 301 and the survey point P calculated by the arithmetic unit 101b, and the offset information that is distance information from the prism 301 to the end of the pole 302 (the tip of the pole). Further, the positional coordinates (position information) here may be other than those calculated by the arithmetic unit 101b.

Further, the storage unit 111 further stores swing guide information of the prism 301. This swing guide information is information produced by a swing guide unit 201b, such as the swing trajectory, the number of swings, or the swing velocity of the prism 301, the degree of accuracy of the positional coordinates of the survey point P calculated by the arithmetic unit 101b, or other information.

The body communication unit 112 is configured to be able to transmit and receive various data D to and from a terminal communication unit 202 and other units of the terminal surveying apparatus 200.

As shown in Figure 2, the terminal surveying apparatus 200 includes a terminal control unit 201, the terminal communication unit 202, a terminal display unit 203, and a terminal operation unit 204. The terminal control unit 201 includes a unit 201a for various types of control and the swing guide unit 201b.

The unit 201a for various types of control of the terminal control unit 201 can control the terminal communication unit 202, the terminal display unit 203, the terminal operation unit 204, and the swing guide unit 201b.

The terminal communication unit 202 is configured to be able to transmit and receive various data D.

The terminal display unit 203 is for displaying various data, such as those composed of a liquid crystal panel. It is also possible to form the terminal display unit 203 integrally with the terminal operation unit 204.

The terminal operation unit 204 is operation means that allows the operator to make inputs for giving control instructions to the unit 201a for various types of control of the terminal control unit 201, for example, those including any device such as a touch panel, a switch, a button, a dial, or a microphone.

The swing guide unit 201b of the terminal control unit 201 estimates the swing state of the prism 301 during swings of the prism 301 based on a plurality of pieces of position information (point cloud data) of the prism 301 acquired by the arithmetic unit 101b of the body control unit 101 and the offset information stored in advance in the storage unit 111, and produces swing guide information of the prism 301 according to the estimated swing state. The swing guide unit 201b informs the operator of the swing state of the prism 301 by displaying the produced swing guide information on the terminal display unit 203. The swing guide unit 201b may function in the terminal surveying apparatus 200 in the initial setting state, or may function only in the terminal surveying apparatus 200 on which predetermined application software is installed.

Further, the swing guide unit 201b calculates the accuracy of the positional coordinates of the survey point P from the estimated swing state. Then, when determining that this accuracy is equal to or greater than a predetermined threshold value (e.g., an accuracy of 100%), the swing guide unit 201b ends the display of the swing guide information on the terminal display unit 203 and the production of the swing guide information. Further, when determining that this accuracy is less than the predetermined threshold value, the swing guide unit 201b produces the swing guide information (swing improving information) for increasing the accuracy.

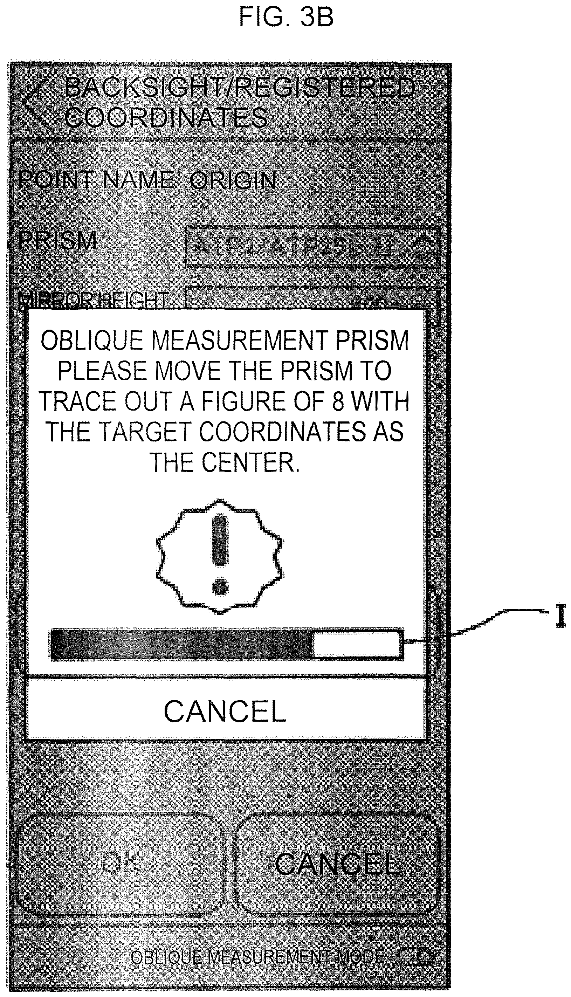

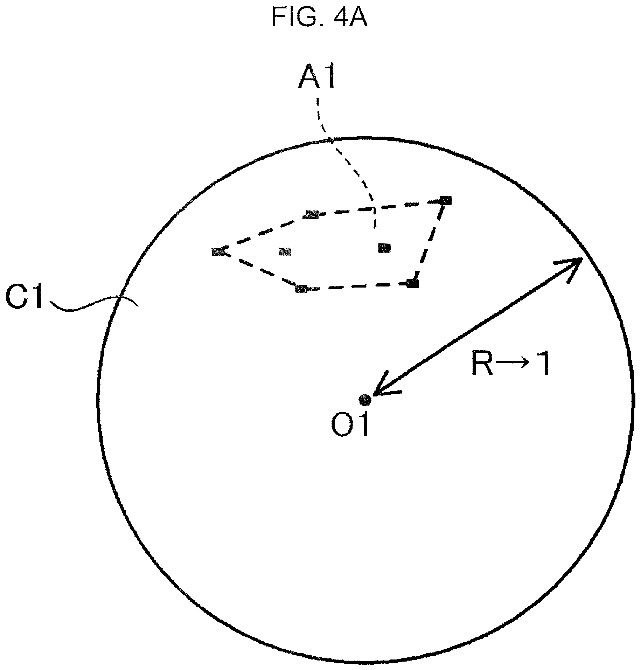

Here, the swing guide information for increasing the accuracy is the swing status as a cause of low accuracy (e.g., the swing trajectory of the prism 301 is not circular but oval), an appropriate way of swinging based on the cause of low accuracy (e.g., as shown in Figure 3B, swinging the prism 301 to trace out a figure of 8 with the survey point P as the center), or other information. Further, examples the swing guide information for improving the accuracy include information on the swing trajectory of the prism 301 (e.g., the swing trajectory shown in Figures 4A-4C), information on the number of swings of the prism 301 (e.g., an indicator I shown in Figure 3B), information on the swing velocity of the prism 301 (e.g., whether the swing velocity is higher or lower than the ideal velocity), and information on the degree of accuracy (e.g., the latest calculated value of accuracy).

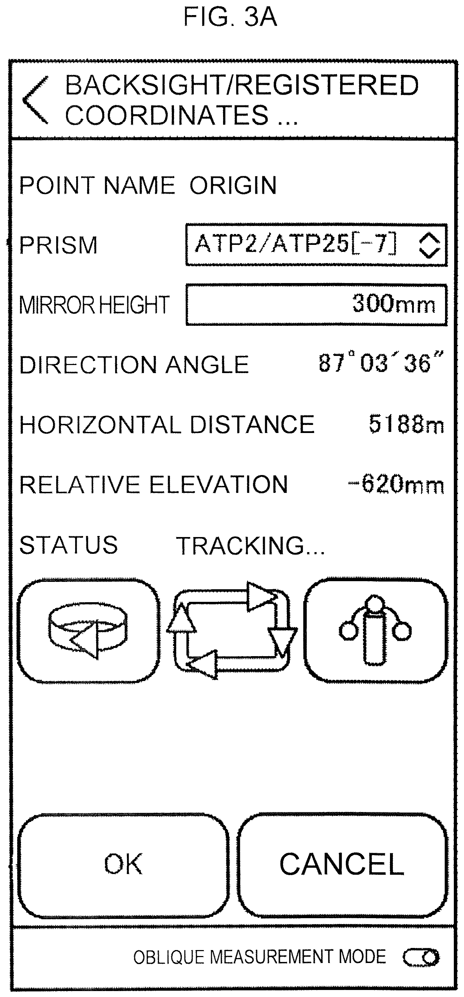

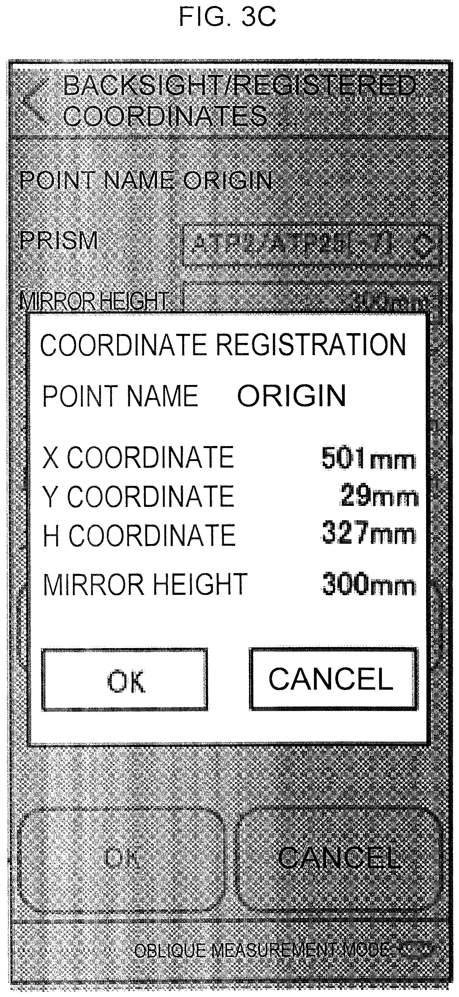

The guidance on the swing state (the swing status and the way of swinging) provided by the swing guide unit 201b of the terminal control unit 201 during swings of the prism 301 will be described. For example, in response to a touch on the OK button on the screen shown in Figure 3A displayed on the terminal display unit 203, the terminal display unit 203 displays the screen shown in Figure 3B. In this screen, the swing guide unit 201b indicates the swing status during swings of the prism 301; specifically, the indicator I indicates the status until the arithmetic unit 101b acquires point cloud data that allows for the determination that the accuracy of the estimated positional coordinates of the survey point P is equal to or greater than the predetermined threshold value. In other words, the indicator I corresponds to the degree of accuracy of the positional coordinates of the survey point P. The accuracy reaching or exceeding the predetermined threshold value results in the indicator I being filled up, leading to the screen displayed on the terminal display unit 203 transitioning from that in Figure 3B to that in Figure 3C. The screen in Figure 3C shows the positional coordinates (501 mm, 209 mm, 327 mm) of the survey point P calculated by the arithmetic unit 101b and the offset R (300 mm).

Further, the screen shown in Figure 3B shows the swing guide information at a certain point in time during swings of the prism 301. The swing guide unit 201b determines that the accuracy of the positional coordinates of the survey point P is less than the predetermined threshold value to show guidance related to an ideal swing trajectory (in this case, a figure of 8), such as "Please move the prism to trace out a figure of 8 with the target coordinates as the center.", on the terminal display unit 203.

A method of calculating and determining the positional coordinates of the survey point P will be described here with reference to Figures 4A-4C. Examples of this calculation and determination method include the following methods (1)-(4). As shown in Figure 4A, the method (1) is a method of positioning a point cloud on or near the surface of a virtual sphere C1 with the offset R as the radius, estimating the center coordinates O1 of the virtual sphere C1 to be the positional coordinates of the survey point P, normalizing the virtual sphere C1 so that its radius is 1, calculating the area A1 of the smallest curved surface including this point cloud, and calculating an accuracy that is the ratio "A1/B1" of the area A1 to a reference area B1 (a method using a convex hull). The reference area B1 is the area of the point cloud when it is possible to determine that a survey with high precision has been made. The accuracy exceeding 1 (100%) results in the completion of the survey (which means that appropriate swings have been made), leading to the determination that the estimated positional coordinates are the positional coordinates of the survey point P.

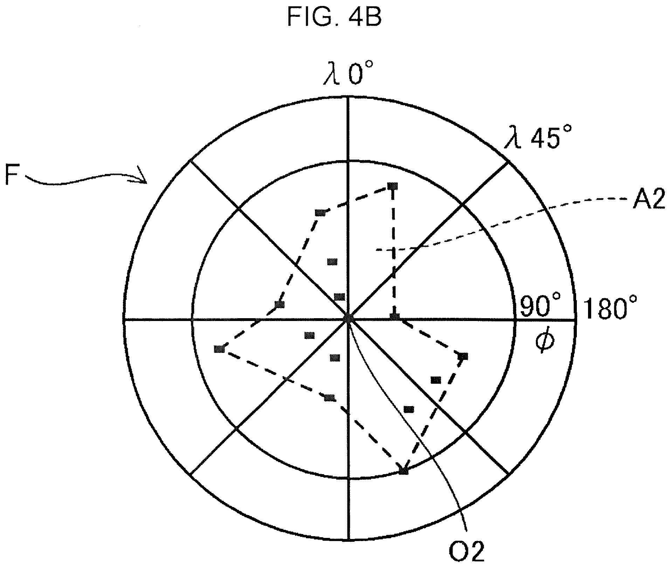

As shown in Figures 4A and 4B, the method (2) is a method of positioning a point cloud on or near the surface of the virtual sphere C1 with the offset R as the radius, estimating the center coordinates O1 of the virtual sphere C1 to be the positional coordinates of the survey point P, normalizing the virtual sphere C1 so that its radius is 1, calculating the average coordinates of this point cloud, converting these average coordinates to polar coordinates (λ, σ), projecting this point cloud onto the polar coordinate plane F, dividing the polar coordinate plane F into N planes in the longitude direction λ (dividing it into eight planes in Figure 4B), extracting the point farthest from the central pole 02 in each of the N divided planes, calculating the area A2 of the surface obtained by connecting the extracted points, and calculating an accuracy that is the ratio "A2/B2" of the area A2 to a reference area B2. The reference area B2 is the area of the point cloud when it is possible to determine that a survey with high precision has been made. The accuracy exceeding 1 (100%) results in the completion of the survey (which means that appropriate swings have been made), leading to the determination that the estimated positional coordinates are the positional coordinates of the survey point P.

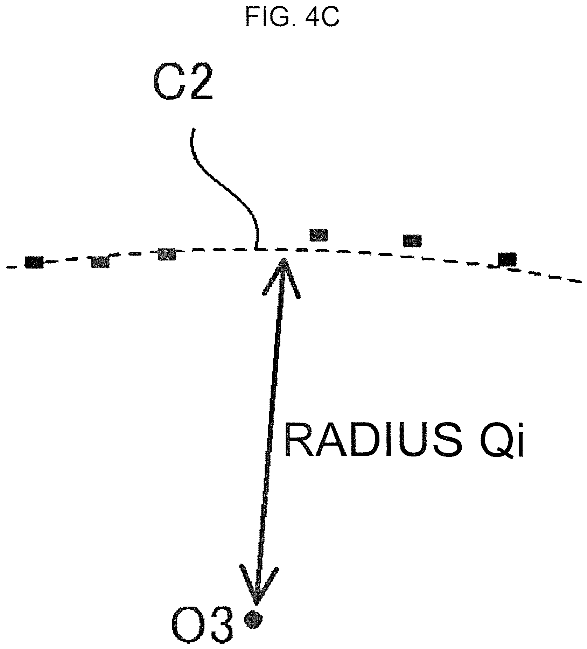

As shown in Figure 4C, the method (3) is a method of positioning a point cloud on or near the surface of a virtual sphere C2 with a radius Qi, estimating the center coordinates 03 of the virtual sphere C2 to be the positional coordinates of the survey point P, and calculating the accuracy as "1-|1-(Qi/R)|". The accuracy exceeding 1 results in the completion of the survey (which means that appropriate swings have been made), leading to the determination that the estimated positional coordinates are the positional coordinates of the survey point P.

As shown in Figure 4C, the method (4) is a method of positioning a point cloud on or near the surface of the virtual sphere C2 with the radius Qi, estimating the center coordinates 03 of the virtual sphere C2 to be the positional coordinates of the survey point P, and calculating the distance "√(P(i) - P(i-n))^2" between the (i-n)-th estimated positional coordinates and the i-th estimated positional coordinates as the accuracy. The accuracy falling below a reference value results in the completion of the survey (which means that appropriate swings have been made), leading to the determination that the i-th estimated positional coordinates are the positional coordinates of the survey point P. The reference value here is the maximum value of the allowable range of deviation between two estimated positional coordinates.

Furthermore, in the above methods (1)-(4), it is also possible to correct the calculated accuracy using the following correction formula and then determine the positional coordinates of the survey point P in order to improve the precision of determining the positional coordinates of the survey point P. The correction formula is "accuracy after correction = accuracy before correction - (σR/R)". Here, "σR" is a standard deviation (normalized by R) calculated based on the distance differences between the distances Ri from the points of the point cloud to the estimated positional coordinates of the survey point P and the offset R that are expressed as positive and negative numbers.

### (Procedure of Surveying Method)

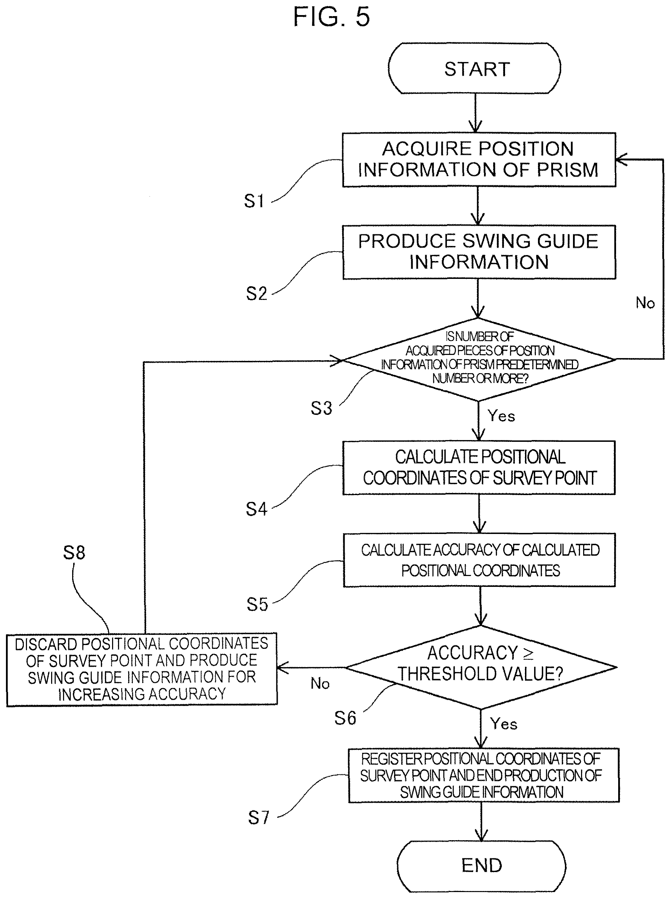

One embodiment of a surveying method according to the present disclosure will be described next. The surveying method according to this embodiment includes steps S1-S8 shown in Figure 5. The surveying method according to this embodiment first assumes that the operator is swinging the prism 301 about the survey point P with the end of the pole 302 in contact with the survey point P.

In step S1, the unit 101a for various types of control of the body control unit 101 shown in Figure 2 continuously illuminates the prism 301 with ranging light emitted from the ranging unit 102 by recognizing the position of the prism 301 using tracking light emitted from the tracking light sending/receiving unit 103 and driving the horizontal driving unit 104 and the vertical driving unit 105. Thereby, the ranging unit 102 measures the distance from the ranging unit 102 to the prism 301 using the ranging light (a ranging step). The horizontal direction detection unit 106 detects the emission direction of the ranging light in the horizontal direction (a horizontal direction detection step). The vertical direction detection unit 107 detects the emission direction of the ranging light in the vertical direction (a vertical direction detection step). The arithmetic unit 101b of the body control unit 101 acquires a plurality of pieces of position information in the swing trajectory of the prism 301 (an arithmetic step).

In step S2, the swing guide unit 201b of the terminal control unit 201 shown in Figure 2 acquires the plurality of pieces of position information acquired by the arithmetic unit 101b and the offset information stored in the storage unit 111 via the terminal communication unit 202. Then, the swing guide unit 201b estimates the swing state of the prism 301 based on the plurality of pieces of position information and the offset information, produces the swing guide information (swing state information) of the prism 301 according to the estimated swing state, and displays it on the terminal display unit 203 as necessary. Examples of the swing guide information here include the information on the swing trajectory as shown in Figures 4A-4C, the indicator I (information on the number of swings) as shown in Figure 3B, and other information.

In step S3, the swing guide unit 201b determines whether or not the number of pieces of position information of the prism 301 acquired in the swing guide unit 201b is a predetermined number or more (e.g., three or more). Then, No in step S3, that is, the swing guide unit 201b determining that the number of pieces of position information of the prism 301 acquired in the swing guide unit 201b is less than the predetermined number results in the swing guide unit 201b repeating step S1 again after a lapse of a predetermined time. Yes in step S3 results in the arithmetic unit 101b proceeding to step S4.

In step S4, the arithmetic unit 101b acquires the swing guide information (e.g., information on the swing trajectory shown in Figures 4A-4C) from the swing guide unit 201b via the body communication unit 112. Then, the arithmetic unit 101b calculates the positional coordinates of the survey point P (Figure 1) from this swing guide information, the plurality of pieces of position information acquired through arithmetic operations in the arithmetic unit 101b, and the offset information stored in the storage unit 111. Furthermore, in step S5, the arithmetic unit 101b calculates the accuracy of these positional coordinates.

In step S6, the swing guide unit 201b acquires the accuracy calculated by the arithmetic unit 101b via the terminal communication unit 202, and determines whether or not the acquired accuracy is equal to or greater than the threshold value. Then, when determining that this accuracy is equal to or greater than the threshold value (when Yes in step S6), the swing guide unit 201b proceeds to step S7. When determining that this accuracy is less than the threshold value (when No in step S6), the swing guide unit 201b proceeds to step S8.

In step S7, the swing guide unit 201b notifies the unit 101a for various types of control that the acquired accuracy is equal to or greater than the threshold value via the body communication unit 112. In response, the unit 101a for various types of control registers the positional coordinates of the survey point P calculated by the arithmetic unit 101b in the storage unit 111, and displays a survey completion report such as that shown in Figure 3C on the body display unit 109. Further, the swing guide unit 201b ends the production of the swing guide information and stops displaying the swing guide information on the terminal display unit 203.

In step S8, the swing guide unit 201b notifies the unit 101a for various types of control that the acquired accuracy is less than the threshold value via the body communication unit 112. In response, the unit 101a for various types of control discards the positional coordinates of the survey point P calculated by the arithmetic unit 101b. Further, the swing guide unit 201b produces swing guide information (swing improving information) for increasing the accuracy; specifically, it informs a cause of the acquired low accuracy as the swing status, or provides guidance on a way of swinging (e.g., moving the prism 301 to trace out a figure of 8) based on this cause of low accuracy, for example, as shown in Figure 3B. After step S8, step S3 is repeated again.

Note that the surveying method according to this embodiment can use the operations possible in the above-described surveying system 1 as necessary.

### (Effects of Surveying System and Surveying Method)

According to the surveying system 1 and the surveying method according to this embodiment, the swing guide unit 201b estimating the swing state of the prism 301 to produce swing guide information (swing state information) can make it easier for the operator to appropriately swing the prism 301.

Further, according to the surveying system 1 and the surveying method according to this embodiment, the arithmetic unit 101b calculating the positional coordinates of the survey point P and the swing guide unit 201b calculating the accuracy enable the unit 101a for various types of control and the swing guide units 201b to perform appropriate processing according to the accuracy (step S7 or step S8 shown in Figure 5).

Furthermore, according to the surveying system 1 and the surveying method according to this embodiment, the swing guide unit 201b produces swing improving information (e.g., a swing trajectory, the number of swings, a swing velocity, or information on the degree of accuracy) that is swing guide information for increasing the accuracy when determining that the accuracy is less than the predetermined threshold value, which can make it easier for the operator to more appropriately swing the prism 301.

### (Surveying Program)

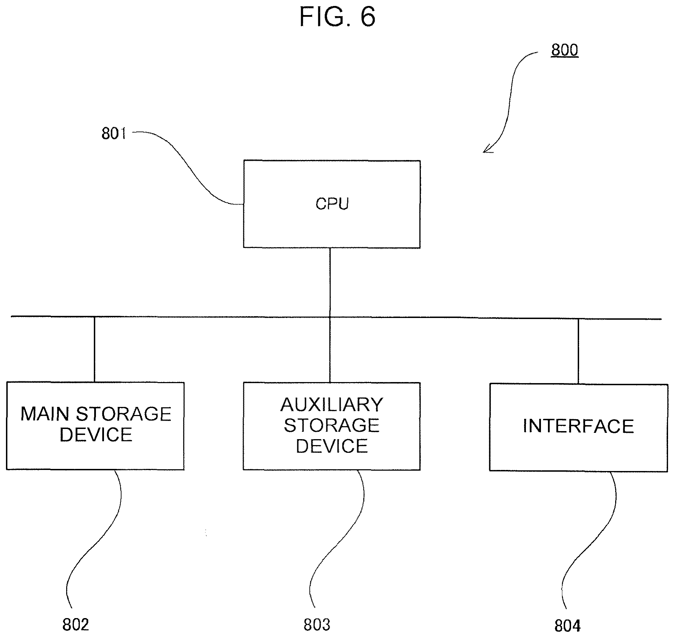

One embodiment of a surveying program according to the present disclosure will be described next. The surveying program according to this embodiment is for causing a computer 800 shown in Figure 6 to execute steps S1-S8 shown in Figure 5.

The computer 800 includes a CPU 801, a main storage device 802, an auxiliary storage device 803 that is a non-transitory tangible medium, and an interface 804. The CPU 801 executes steps S1-S8 shown in Figure 5 by loading the surveying program according to this embodiment from the auxiliary storage device 803 and deploying it on the main storage device 802.

The surveying program according to this embodiment can also produce the same effects as the surveying system 1 described above.

This embodiment can use a magnetic disk, a magneto-optical disk, a CD-ROM, a DVD-ROM, and a semiconductor memory connected via the interface 804 and other media as a non-transitory tangible medium instead of the auxiliary storage device 803.

The surveying program according to this embodiment may be a differential file (a differential program) for executing steps S1-S8 shown in Figure 5 in combination with other programs already stored in the auxiliary storage device 803.

### (Modifications of Surveying System)

Although the description of the above surveying system 1 takes as an example a case where the operator measures the survey point P on the boundary line between the ground E and the standing wall W, the surveying system 1 is applicable to cases where the operator measures a survey point at any location. For example, the surveying system 1 is applicable under various situations where the operator is unable to place the pole 302 vertically or horizontally, such as when the operator measures a survey point on the boundary line between a standing wall and the ceiling, or when the operator makes a survey by placing the end of the pole 302 at the survey point while avoiding obstacles near the survey point. Note that the surveying system 1 is also applicable when the operator measures a survey point where they can place the pole 302 vertically or horizontally.

Although the body part 100b has a cylindrical form in the surveying system 1, the body part 100b may have a form other than a cylindrical form (e.g., a rectangular parallelepiped form).

Although the horizontal driving unit 104 is configured to be able to drive the entire body part 100b and the telescope unit 110 in the horizontal direction in the surveying system 1, the horizontal driving unit 104 may be configured to be able to drive only either the entire body part 100b or the telescope unit 110 in the horizontal direction.

Although the vertical driving unit 105 is configured to be able to drive the telescope unit 110 in the vertical direction in the surveying system 1, the vertical driving unit 105 may be configured to be able to drive the entire body part 100b in the vertical direction instead of the telescope unit 110, or may be configured to be able to drive both the telescope unit 110 and the entire body part 100b in the vertical direction.

Further, the surveying system 1 may cause the body control unit 101 to function as the swing guide unit 201b, and may cause the terminal control unit 201 to function as the arithmetic unit 101b. Furthermore, it is also possible to provide a control unit to the retroreflective instrument 300 and cause this control unit to function as the swing guide unit 201b and the arithmetic unit 101b.

Furthermore, the surveying system 1 may further include an external device such as an external controller having a function as a data collector. In this case, this external device may include the arithmetic unit 101b, the swing guide unit 201b, a storage unit, and a communication unit, and perform arithmetic operations and guidance on swinging while transmitting/receiving data to/from the body part 100b of the body surveying apparatus 100.

The technical features of the invention according to the present disclosure are, for example, as follows.
[1] A surveying system comprising:
   a ranging unit that measures distance to a survey target using ranging light;
   a direction detection unit that detects an emission direction of the ranging light;
   an arithmetic unit that acquires position information of the survey target based on the distance measured by the ranging unit and the emission direction detected by the direction detection unit;
   a storage unit that stores offset information that is distance information from the survey target to a survey point; and
   a swing guide unit that estimates a swing state of the survey target based on a plurality of pieces of the position information acquired by the arithmetic unit and the offset information, and produces swing guide information of the survey target according to the estimated swing state.
[2] The surveying system according to [1] above, wherein
   the arithmetic unit calculates a positional coordinate of the survey point from the plurality of pieces of position information and the offset information, and
   the swing guide unit calculates accuracy of the calculated positional coordinate of the survey point from the estimated swing state, and ends production of the swing guide information when determining that the accuracy is equal to or greater than a predetermined threshold value.
[3] The surveying system according to [1] above, wherein
   the arithmetic unit calculates a positional coordinate of the survey point from the plurality of pieces of position information and the offset information, and
   the swing guide unit calculates accuracy of the calculated positional coordinate of the survey point from the estimated swing state, and produces the swing guide information for increasing the accuracy when determining that the accuracy is less than a predetermined threshold value.
[4] The surveying system according to [3] above, wherein the swing guide information for increasing the accuracy includes information related to a swing trajectory of the survey target.
[5] The surveying system according to [3] or [4] above, wherein the swing guide information for increasing the accuracy includes information on the number of swings of the survey target.
[6] The surveying system according to [3], [4], or [5] above, wherein the swing guide information for increasing the accuracy includes information on swing velocity of the survey target.
[7] The surveying system according to [3], [4], [5], or [6], wherein the swing guide information for increasing the accuracy includes information on a degree of the accuracy.
[8] A surveying apparatus comprising:
   a ranging unit that measures distance to a survey target using ranging light;
   a direction detection unit that detects an emission direction of the ranging light;
   an arithmetic unit that acquires position information of the survey target based on the distance measured by the ranging unit and the emission direction detected by the direction detection unit;
   a storage unit that stores offset information that is distance information from the survey target to a survey point; and
   a swing guide unit that estimates a swing state of the survey target based on a plurality of pieces of the position information acquired by the arithmetic unit and the offset information, and produces swing guide information of the survey target according to the estimated swing state.
[9] A surveying method comprising:
   a ranging step of measuring distance to a survey target using ranging light;
   a direction detection step of detecting an emission direction of the ranging light;
   an arithmetic step of acquiring position information of the survey target based on the distance measured in the ranging step and the emission direction detected in the direction detection step; and
   a swing guide step of estimating a swing state of the survey target based on a plurality of pieces of the position information acquired in the arithmetic step and offset information that is distance information from the survey target to a survey point, and producing swing guide information of the survey target according to the estimated swing state.
[10] A surveying program for causing a computer to execute:
   a swing guide step of estimating a swing state of a survey target based on a plurality of pieces of position information of the survey target acquired using a surveying method and offset information that is distance information from the survey target to a survey point, and producing swing guide information of the survey target according to the estimated swing state, the surveying method comprising:
   a ranging step of measuring distance to the survey target using ranging light;
   a direction detection step of detecting an emission direction of the ranging light; and
   an arithmetic step of acquiring each of the plurality of pieces of position information based on the distance measured in the ranging step and the emission direction detected in the direction detection step.

### [Reference Signs List]

- 1: surveying system
- 100: body surveying apparatus
- 100a: support part
- 100b: body part
- 101: body control unit
- 101a: unit for various types of control
- 101b: arithmetic unit
- 102: ranging unit
- 103: tracking light sending/receiving unit
- 104: horizontal driving unit
- 105: vertical driving unit
- 106: horizontal direction detection unit
- 107: vertical direction detection unit
- 108: body operation unit
- 109: body display unit
- 110: telescope unit
- 111: storage unit
- 112: body communication unit
- 200: terminal surveying apparatus
- 201: terminal control unit
- 201a: unit for various types of control
- 201b: swing guide unit
- 202: terminal communication unit
- 203: terminal display unit
- 204: terminal operation unit
- 300: retroreflective instrument
- 301: prism (survey target)
- 302: pole
- A1, A2: area
- C1, C2: virtual sphere
- D: data
- E: ground
- F: polar coordinate plane
- I: indicator
- L: light
- O1: center coordinate
- O2: central pole
- O3: center coordinate
- P: survey point
- Qi: radius
- R: offset
- W: standing wall

## Claims

1. A surveying system comprising:
a ranging unit that measures distance to a survey target using ranging light;
a direction detection unit that detects an emission direction of the ranging light;
an arithmetic unit that acquires position information of the survey target based on the distance measured by the ranging unit and the emission direction detected by the direction detection unit;
a storage unit that stores offset information that is distance information from the survey target to a survey point; and
a swing guide unit that estimates a swing state of the survey target based on a plurality of pieces of the position information acquired by the arithmetic unit and the offset information, and produces swing guide information of the survey target according to the estimated swing state.

2. The surveying system according to claim 1, wherein
the arithmetic unit calculates a positional coordinate of the survey point from the plurality of pieces of position information and the offset information, and
the swing guide unit calculates accuracy of the calculated positional coordinate of the survey point from the estimated swing state, and ends production of the swing guide information when determining that the accuracy is equal to or greater than a predetermined threshold value.

3. The surveying system according to claim 1, wherein
the arithmetic unit calculates a positional coordinate of the survey point from the plurality of pieces of position information and the offset information, and
the swing guide unit calculates accuracy of the calculated positional coordinate of the survey point from the estimated swing state, and produces the swing guide information for increasing the accuracy when determining that the accuracy is less than a predetermined threshold value.

4. The surveying system according to claim 3, wherein the swing guide information for increasing the accuracy is information related to a swing trajectory of the survey target.

5. The surveying system according to claim 3, wherein the swing guide information for increasing the accuracy is information on the number of swings of the survey target.

6. The surveying system according to claim 3, wherein the swing guide information for increasing the accuracy is information on swing velocity of the survey target.

7. The surveying system according to claim 3, wherein the swing guide information for increasing the accuracy is information on a degree of the accuracy.

8. A surveying apparatus comprising:
a ranging unit that measures distance to a survey target using ranging light;
a direction detection unit that detects an emission direction of the ranging light;
an arithmetic unit that acquires position information of the survey target based on the distance measured by the ranging unit and the emission direction detected by the direction detection unit;
a storage unit that stores offset information that is distance information from the survey target to a survey point; and
a swing guide unit that estimates a swing state of the survey target based on a plurality of pieces of the position information acquired by the arithmetic unit and the offset information, and produces swing guide information of the survey target according to the estimated swing state.

9. A surveying method comprising:
a ranging step of measuring distance to a survey target using ranging light;
a direction detection step of detecting an emission direction of the ranging light;
an arithmetic step of acquiring position information of the survey target based on the distance measured in the ranging step and the emission direction detected in the direction detection step; and
a swing guide step of estimating a swing state of the survey target based on a plurality of pieces of the position information acquired in the arithmetic step and offset information that is distance information from the survey target to a survey point, and producing swing guide information of the survey target according to the estimated swing state.

10. A surveying program for causing a computer to execute:
a swing guide step of estimating a swing state of a survey target based on a plurality of pieces of position information of the survey target acquired using a surveying method and offset information that is distance information from the survey target to a survey point, and producing swing guide information of the survey target according to the estimated swing state, the surveying method comprising:
a ranging step of measuring distance to the survey target using ranging light;
a direction detection step of detecting an emission direction of the ranging light; and
an arithmetic step of acquiring each of the plurality of pieces of position information based on the distance measured in the ranging step and the emission direction detected in the direction detection step.
